## Europäisches Patentamt

## European Patent Office

## Office européen des brevets

(19)

(11) Veröffentlichungsnummer: **0 106 078**

**A1**

(12) ## EUROPÄISCHE PATENTANMELDUNG

(21) Anmeldenummer: **83108363.9**

(22) Anmeldetag: **25.08.83**

(51) Int. Cl.³: **A 22 C 7/00**

(30) Priorität: **17.09.82 DE 3234442**

(43) Veröffentlichungstag der Anmeldung:
**25.04.84 Patentblatt 84/17**

(84) Benannte Vertragsstaaten:
**AT BE CH FR GB IT LI LU NL SE**

(71) Anmelder: **Handsche, Hermann**
**Ringstrasse 56**
**D-7820 Titisee-Neustadt(DE)**

(72) Erfinder: **Handsche, Hermann**
**Ringstrasse 56**
**D-7820 Titisee-Neustadt(DE)**

(74) Vertreter: **Hubbuch, Helmut, Dipl.-Ing et al,**
**Patentanwälte Dr. Rudolf Bauer Dipl.-Ing. Helmut**
**Hubbuch Dipl.-Phys. Ulrich Twelmeier Westliche**
**Karl-Friedrich-Strasse 29-31**
**D-7530 Pforzheim(DE)**

(54) **Vorrichtung zum Aufbereiten von in einem Formbehälter befindlichem Fleisch sowie damit durchführbares Verfahren.**

(57) Eine Vorrichtung (1) dient zum Aufbereiten, insbesondere zum Verdichten von in einem Formbehälter (2) befindlichem rohen Fleisch. Dazu wird in einer bestimmten Folge in Kombination ein Druckbeaufschlagen mittels einer Preßvorrichtung, ein Beaufschlagen mit Unterdruck sowie eine Vibrationsbeaufschlagung vorgenommen. Die Formbehälter (2) sind dazu innerhalb einer Vakuumkammer (4) untergebracht und stehen auf einem mit einem Vibrationsgeber verbundenen Tisch (5). Oberhalb der Vakuumkammer (4) ist die Preßvorrichtung mit Druckzylindern angeordnet, mittels denen auf den Formbehältern (2) befindliche Spannrastdeckel niedergedrückt werden können.

Fig 1

EP 0 106 078 A1

Vorrichtung zum Aufbereiten von in einem Formbehälter befindlichem Fleisch sowie damit durchführbares Verfahren

Die Erfindung betrifft eine Vorrichtung zum Aufbereiten,
insbesondere zum Verdichten von in einem Formbehälter befindlichem, rohen Fleisch, wobei diese Vorrichtung eine
Preßvorrichtung zur Beaufschlagung des Fleisches aufweist.

Es ist bereits bekannt, rohes Fleisch, insbesondere gepökeltes Fleisch, Schinken, Schulter oder andere knochenlose Fleischstücke tierischer Herkunft in einen Formbehälter zu füllen, in dem es dann druckbeaufschlagt wird, insbesondere um Lufteinschlüsse zu beseitigen. Man erreicht
dadurch neben dem Formen des Fleischstückes unter anderem
auch einen besseren Zusammenhalt des Fleischstückes.
Trotz dieser einseitigen Druckbeaufschlagung sowie weiterer Maßnahmen hat es sich herausgestellt, daß die erzielte
Verdichtung und das Entfernen von Lufteinschlüssen noch
verbesserungswürdig ist.
Es ist somit Aufgabe der Erfindung, eine Vorrichtung der
eingangs erwähnten Art zu schaffen, bei der das Entfernen
von Lufteinschlüssen u. dgl. aus in einem Formbehälter
befindlichem, rohen Fleisch verbessert ist und in vergleichsweise kurzer Zeit vorgenommen werden kann, und wobei gleichzeitig auch eine schonende Behandlung des
Fleisches erfolgt.
Zur Lösung dieser Aufgabe wird erfindungsgemäß insbesondere vorgeschlagen, daß der Formbehälter mit einem Vibrationsgeber einer Vibrationseinrichtung in Verbindung
steht. Dadurch erfolgt bereits ohne einseitige Pressung
eine "innere" Verdichtung des Fleisches, durch die bereits
ein Großteil von Lufteinschlüssen entfernt werden können.

Eine erfindungswesentliche Weiterbildung sieht vor, daß am
Formbehälter zumindest während der Aufbereitung eine das
Fleisch im wesentlichen überdeckende Abdeckplatte vorgesehen
ist , wobei die Preßvorrichtung einen Führungshalter zum
Halten dieser Abdeckplatte etwa in horizontaler Lage und/
oder zur Druckbeaufschlagung der Abdeckplatte aufweist, und
daß vorzugsweise die Abdeckplatte durch den den Formbehälter
abschließenden Deckel gebildet ist, der insbesondere als
Spannrastdeckel ausgebildet ist. Durch den Führungshalter
wird beim Vibrationsbeaufschlagen des im Formbehälter befindlichen Fleisches, wo bereits ein Verdichten des
Fleiches stattfindet, eine Parallelführung des Deckels
erreicht. 							Durch die Verwendung
des den Formbehälter abschließenden Spannrastdeckels
gleichzeitig als Abdeckplatte und zur Druckbeaufschlagung
durch die Preßvorrichtung kann das im Formbehälter befindliche Fleisch nach der Aufbereitung unter beibehaltung des
Preßdruckes weiter verarbeitet werden.
Man kennt zwar bereits Vorrichtungen, bei denen mit Hilfe
eines Preßstempels das Fleisch zum Verdichten druckbeaufschlagt wird. Nach dem Verdichtungsvorgang wird jedoch
dieser Preßstempel wieder zurückgefahren, so daß dabei
zum einen eine Entlastung des vorher druckbeaufschlagten
Fleisches und unter Umständen auch ein teilweises Hängenbleiben an diesem Preßstempel erfolgen kann, wodurch der
eigentliche Verdichtungsvorgang zumindest zum Teil wieder
aufgehoben wird. Bei der erfindungsgemäßen Vorrichtung
bleibt dagegen der Spannrastdeckel nach der Aufbereitung
in Preßstellung, so daß das Fleisch auch nach dem Entnehmen des Formbehälters aus der Vorrichtung weiterhin unter
Druck bleibt.

Besonders vorteilhaft ist es, wenn eine Vakuumkammer vorgesehen ist, innerhalb der sich die Preßvorrichtung sowie die Vibrationseinrichtung befinden. Die Kombination von Vakuum-, Preß- sowie Vibrationsbeaufschlagung ergeben beim Formen und Verdichten von Fleisch ein besonders gutes Ergebnis, wobei sich dies auch in vergleichsweise kurzer Zeit erreichen läßt.

Vorzugsweise ist die Vakuumkammer zur Aufnahme von einem oder mehreren, vorzugsweise zur gleichzeitigen Aufnahme und Aufbereitung von zwei Formbehältern ausgebildet. Dadurch lassen sich hohe Durchlaufstückzahlen bzw. auf die einzelne Fleischportion bezogene, geringe Bearbeitungszeiten erzielen.

Zweckmäßigerweise weist die Vorrichtung eine Steuerung für einen insbesondere einstellbaren Programmablauf während der Aufbereitung auf. Durch verschiedene Programme können auch unterschiedliche Aufbereitungsabläufe in Anpassung an das jeweils gewünschte Endprodukt gefahren werden. Beispielsweise besteht die Möglichkeit, ein sogenanntes Formpökeln vorzusehen, mittels dem rohe, trocken gesalzene Schinken oder andere Fleischteile behandelt werden können. Diese Behandlung dient der Vorbereitung zum späteren Räuchern. Andererseits kann aber auch durch einen anderen Programmablauf naß gesalzenes Pökelfleisch für ein späteres Garen, Braten, Backen oder Kochen vorbereitet werden. Die Unterschiede beim Programmablauf betreffen dabei insbesondere die Zeitdauer und Intensität der Vakuumbeaufschlagung, der Preßbeaufschlagung sowie der Vibrationsbeaufschlagung.

Die Erfindung betrifft auch ein Verfahren zum Aufbereiten, insbesondere zum Verdichten von Fleisch vor einem Weiterbearbeitungsvorgang, wobei das Fleisch zumindest einer Druckbeaufschlagung ausgesetzt wird.
Ein solches Verfahren ist erfindungsgemäß insbesondere dadurch gekennzeichnet, daß während der Aufbereitung des Fleisches ein Vibrationsverdichten vorgenommen wird.

Dadurch erfolgt bereits ohne Druckbeaufschlagung ein Verdichten des Fleisches, so daß insgesamt ein verbessertes
Ergebnis erzielbar ist. Zweckmäßigerweise erfolgt während
der Aufbereitung auch eine Vakuumbeaufschlagung. In Kombination mit der Druckbeaufschlagung sowie der Vibrationsverdichtung ist ein besonders gutes Ergebnis in kurzer Zeit
erzielbar.

Zusätzliche Ausgestaltungen der Erfindung sind in den weiteren Unteransprüchen aufgeführt. Nachstehend ist die Erfindung mit ihren wesentlichen Einzelheiten anhand der
Zeichnung noch näher erläutert.

Es zeigt:

/5

Fig. 1    eine Vorderseitenansicht einer erfindungsgemäßen
          Vorrichtung,

Fig. 2    eine Aufsicht dieser Vorrichtung,

Fig. 3    eine etwas schematisierte offene Seitendarstellung
          einer erfindungsgemäßen Vorrichtung und

Fig. 4    eine etwa Fig. 3 entsprechende Ansicht, hier jedoch
          in einer anderen Arbeitsstellung.

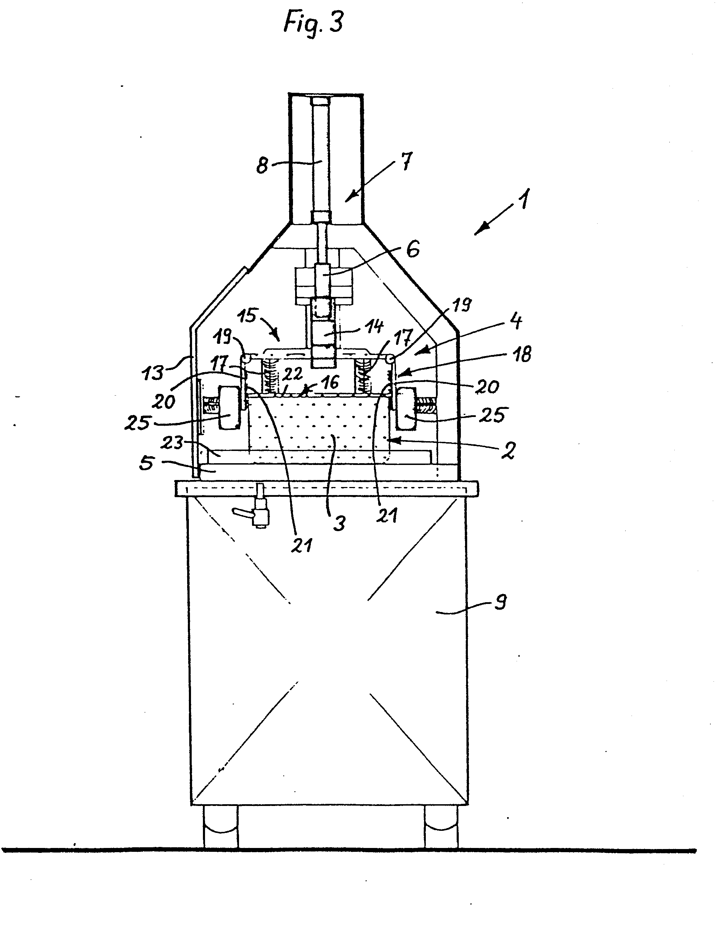

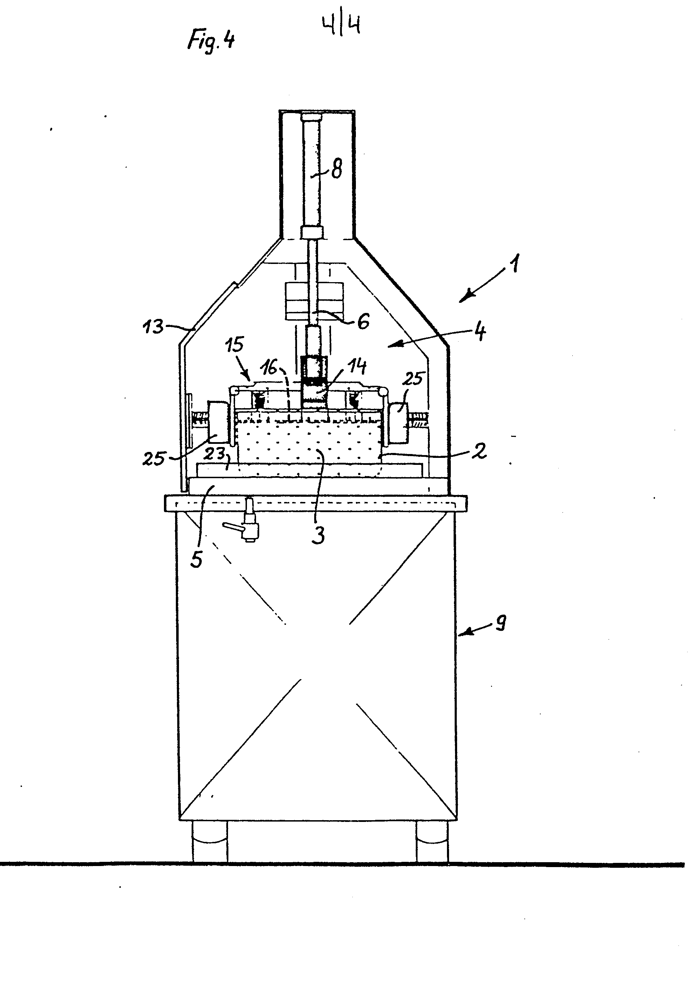

Eine Vorrichtung 1 dient zum Aufbereiten von in einem Formbehälter 2 befindlichem, rohen Fleisch 3. Insbesondere wird
dabei ein Preßverschließen vorgenommen, bei dem ein Verdichten und insbesondere auch Austreiben von Lufteinschlüssen
aus dem Fleisch 3 erfolgt.
Im Ausführungsbeispiel weist die Vorrichtung 1 im wesentlichen eine Vakuumkammer 4 auf, innerhalb der die Aufbereitung des in den Formbehältern 2 befindlichen Fleisches 3
erfolgt.
Für die Formbehälter 2 ist ein Tisch 5 als Stellunterlage
vorgesehen, der als Schwingtisch ausgebildet ist und mit
einem Vibrationsgeber in Antriebsverbindung steht. Außer
der Vibrationseinrichtung befinden sich innerhalb der
Vakuumkammer 4 auch noch die Hubstempel 6 der im wesentlichen oberhalb der Vakuumkammer 4 angeordneten Preßvorrichtung 7. Die Hubstempel 6 gehören zu separaten Druckzylindern 8, die gut in Fig. 3 und 4 erkennbar sind.
Zweckmäßigerweise kommen hierbei Pneumatikzylinder zum
Einsatz.
Unterhalb der Vakuumkammer 4 ist ein Unterschrank 9 angeordnet, in dem sich eine Vakuumpumpe 10, eine Steuerung 11
mit einstellbaren Zeituhren 12 sowie weitere Funktionsteile
befinden. Durch den Unterschrank 9 befindet sich die Vakuumkammer 4 in einer bedienungsgerechten Arbeitshöhe.

Die Vakuumkammer 4 ist an der Vorderseite durch zwei Türen
13 luftdicht verschließbar. Die Türen 13 können Sichtfenster aufweisen oder können selbst, wie im Ausführungsbeispiel gezeigt, aus durchsichtigem Material, insbesondere
Acrylglas bestehen. Dadurch ist eine      Beobachtung des
Funktionsablaufes beim Aufbereiten möglich.

Am unteren Ende der Hubstempel 6 sind bügelartige Führungshalter 14 befestigt, die gleichzeitig auch zur Druckbeaufschlagung des Formbehälter-Deckels 15 dienen. Der Führungshalter 14 hält gleichzeitig auch den Deckel 15 in einer
etwa horizontalen Lage, wenn durch Vibrations- und/oder
Vakuumbeaufschlagung vor der Preßbeaufschlagung ein Verdichten des im Formbehälter 2 befindlichen Fleisches 3
eintritt.
Der Deckel 15 ist als Spannrastdeckel ausgebildet. Er weist
insbesondere eine das Fleisch im wesentlichen überdeckende
und gegebenenfalls auch druckbeaufschlagende Abdeckplatte
16 auf, die über Druckfedern 17 mit einer Rasteinrichtung
18 in Verbindung steht. An dieser Rasteinrichtung 18 greifen auch die Führungshalter 14 der Preßvorrichtung 7 an,
so daß der Preßdruck jeweils über die Druckfedern 17 weitergegeben wird. Die Rasteinrichtung 18 weist seitlich an
Scharnieren 19 befestigte Rastarme 20 auf, die innenseitig
eine Rastverzahnung 21 zum Hintergreifen des Behälterrandes
22 tragen. Man erreicht durch diese Spannrastdeckel eine
gleichmäßige, kontinuierliche Druckbeaufschlagung des im
Formbehälter 2 befindlichen Fleisches 3. Dabei kann auch
nach Entlastung durch die Preßvorrichtung 7 ein weiteres
Verdichten des Fleisches 3 durch die vorgespannten Druckfedern 17 erfolgen.

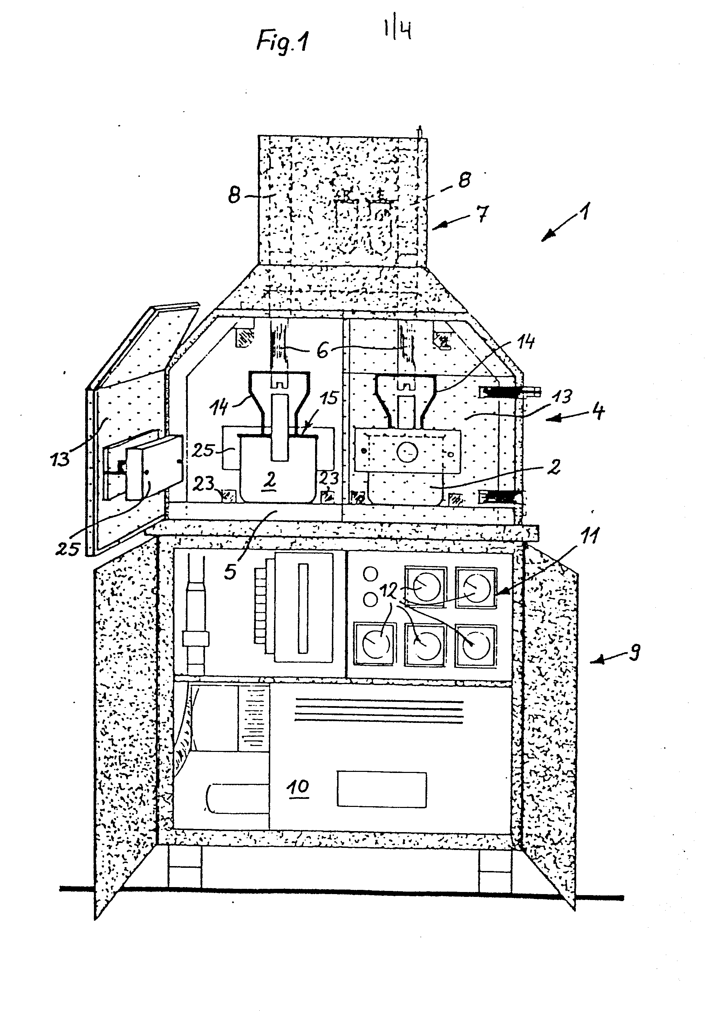

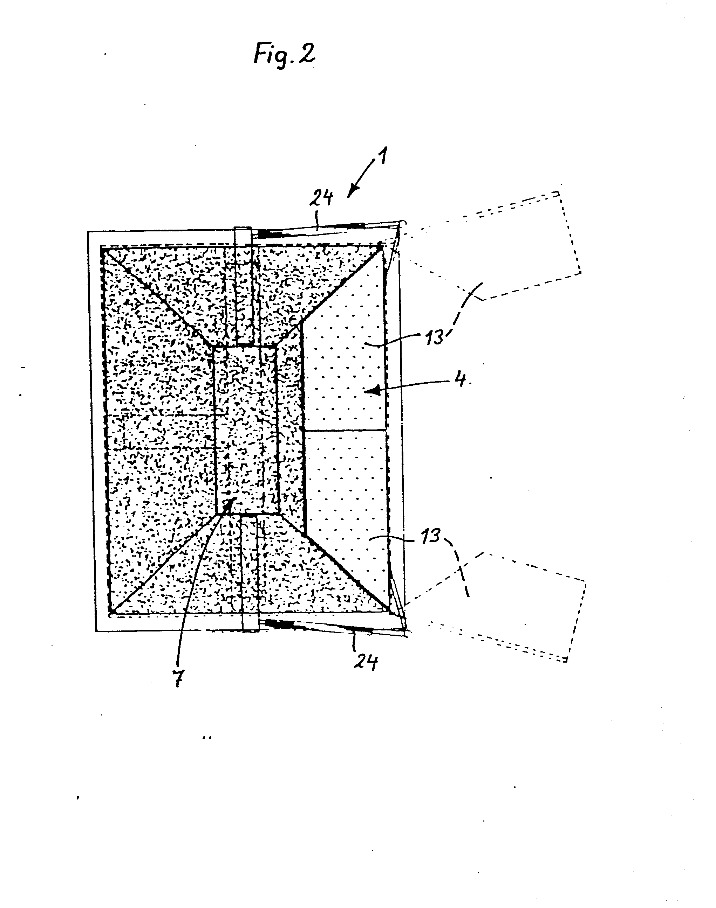

Die Figuren 3 und 4 lassen gut erkennen, daß an der Rückseite sowie an der Tür 13 gefederte Anschläge 25 vorgesehen
sind, die die Rastarme 20 während der Bearbeitung in der
Vakuumkammer 4 gegen den Behälterrand 22 drücken. Diese Druckbeaufschlagung ist jedoch nur so stark vorgesehen, daß ein Nachrasten der Rastarme 20 während der Druckbeaufschlagung durch die Preßvorrichtung 7 möglich ist. Nach der Aufbereitung in der Vakuumkammer 4 bleiben die Spannrastdeckel 15 durch die Rasteinrichtung 18 mit den Formbehältern 2 verbunden. Zur seitlichen Lagefixierung der Formbehälter 2 sind auf dem Schwingtisch in Einschieberichtung verlaufende Schienen 23 (vgl. Fig. 1) vorgesehen. Diese sind in ihrem Seitenabstand verstellbar, so daß auch unterschiedlich große Formbehälter 2 einsetzbar sind. An den Türen 13 (Fig. 2) greifen zum Öffnen und Schließen Hubzylinder 24 an. Der eigentliche Schließ- bzw. Dichtdruck wird jedoch von dem in der Vakuumkammer 4 während der Bearbeitung herrschenden Unterdruck erzeugt.

Durch die Steuerung 11 können unterschiedliche Programmabläufe bezüglich der Vakuumbeaufschlagung, der Vibrationsbeaufschlagung und auch der Preßbeaufschlagung eingestellt werden.

Beispielsweise können rohe, trocken gesalzene Schinken oder andere Fleischteile tierischer Herkunft zum Formpökeln in den bzw. die Formbehälter 2 eingelegt werden, die dann mit dem Deckel 15 verschlossen werden. Erwähnt sei hierbei, daß der Deckel 15 mit seiner Abdeckplatte 16 derart in den Formbehälter 2 paßt, daß im Randbereich noch etwas Freiraum zum Entweichen von Luft u. dgl. verbleibt. Der Formbehälter 2 wird mit in der ersten Spannraste eingerastetem Deckel 15 in die Vakuumkammer 4 eingeschoben, wobei sich die Rastarme 20 an der Vorder- bzw. Hinterseite befinden. Nach dem Schließen der Türen 13 sind diese Rastarme 20 etwas druckbeaufschlagt, so daß bei einer folgenden Preßbeaufschlagung ein Abrutschen während des Tieferrastens vermieden wird. Gleichzeitig ist dadurch auch der Formbehälter 2 gegen Verschieben festgelegt. In Querrichtung dazu wird eine Seitenverschiebung durch die Schienen 23 verhindert. Bei dem für ein Formpökeln vorgesehenen Programmablauf

- 8 -

werden nach Startfreigabe zunächst die Türen 13 durch die
Hubzylinder 24 geschlossen. Anschließend wird insbesondere
zum dichten Verschließen der Türen 13 ein leichtes Vakuum
in der Vakuumkammer 4 aufgebaut. Gleichzeitig senken sich
die beiden Hubstempel 6 mit den daran befestigten Führungshaltern 14 auf die Deckel und halten diese in einer etwa
horizontalen Lage fest. Danach setzt die über den gesamten
Programmablauf sich erstreckende Vibration ein, durch die
ein Verdichten des Fleisches 3 erfolgt und durch die auch
das Eindringen von Pökelsalz in das Fleisch beschleunigt
wird. Nach einem Vibrationsvorlauf von beispielsweise 50
bis 170 Sekunden wird die Vakuumbeaufschlagung in einem
weiteren Programmschritt auf beispielsweise 0,8 bis 0,9 bar
erhöht, wodurch das Verdichten und auch schnelle Eindringen
von Pökelsalz und schließlich auch das Entfernen von Lufteinschlüssen begünstigt wird. Wenn etwa die Hälfte der Gesamtzeit der Vakuumbeaufschlagung abgelaufen ist, beginnen
die Druckzylinder 8 taktweise den jeweiligen Deckel 15 anzupressen, bis eine Endstellung erreicht ist. Der Vorschub
der Druckzylinder 8 erfolgt in vergleichsweise großen Abständen, durch die eine schonende Behandlung des Fleisches
gegeben ist und wodurch auch eine gute Formgebung erreichbar ist. Nach Erreichen der Endstellung der Deckel 15 werden die Führungshalter 14 von den Hubstempeln 6 zurückgezogen und die Vakuumkammer 4 wird belüftet. Nach dem Öffnen
der Türen 13 können die Formbehälter 2 mit aufgesetzten,
verrasteten Spannrastdeckeln 15 der Vakuumkammer 4 entnommen werden.
Der vorbeschriebene Vorgang wird dann über mehrere Wochen
hinweg jede Woche einmal ohne erneute Salzzugabe wiederholt, bis das Produkt durchgepökelt ist.

Bei einem anderen, einstellbaren Programmablauf kann auch
ein Aufbereiten von naß gesalzenem Pökelfleisch für einen
anschließenden Gar-, Brat-, Back- oder Kochprozeß erfolgen.
Dazu werden zunächst nach Betätigung des Startfreigabeknopfes für den Programmablauf die Türen durch die Hubzylinder 24 geschlossen und durch einen geringen Unterdruck
in der Vakuumkammer 4 rüttelfest geschlossen. Gleichzeitig
fahren die Hubstempel 6 der Druckzylinder 8 nach unten und
die an ihrem unteren Ende befestigten Führungshalter 14
halten den Deckel 15 in einer etwa horizontalen Lage. Nach
diesem Programmschritt setzt die über den gesamten Programmablauf sich erstreckende Vibration ein, durch die das in den
Formbehältern 2 befindliche Fleisch verdichtet wird. Nach
einer Vibrationsvorlaufzeit von beispielsweise 2 bis 10
Sekunden wird der Unterdruck auf etwa 0,8 bis 0,9 bar erhöht und die Druckzylinder 8 beginnen taktweise in einstellbaren Intervallen, den Deckel 15 nach unten zu bewegen, wobei bei jedem Hubabschnitt ein entsprechendes
Verrasten der Rastverzahnung 21 am Behälterrand 22 erfolgt.
Dieses taktweise Festpressen erfolgt bis zu einer vorgewählten und mittels Druckreduzierung einstellbaren Enddruckstärke. Nach Erreichen dieses Enddruckes wird der
Hubstempel 6 mit dem Führungshalter 14 nach oben gefahren
und die Vakuumkammer 4 belüftet. Nach dem Öffnen der Türen
13 können die mit den Spannrastdeckeln 15 versehenen Formbehälter 2 entnommen werden. Nach dieser Aufbereitung erfolgt ein Gar-, Brat-, Back- oder Kochprozeß, wobei die
Formbehälter 2 gleichzeitig als Kochbehälter od. dgl.
dienen. Die Aufbereitung durch die erfindungsgemäße Vorrichtung 1 dauert hierbei etwa 25 bis 50 Sekunden.

Bei den beiden vorbeschriebenen, beispielsweise ausgeführten Aufbereitungsverfahren ist unter anderem auch besonders
vorteilhaft, daß der Deckel 15 mit dem Formbehälter
auch für eine weitere Verarbeitung mit dem Formbehälter 2
in Preßstellung verbunden bleiben kann, so daß ein Auflockern des im Formbehälter 2 befindlichen Fleisches
sicher vermieden wird. Dies könnte beispielsweise dann
auftreten, wenn die Druckbeaufschlagung mit Hilfe eines
Preßstempels erfolgt, der vor der Entnahme des Formbehälters 2 wieder entfernt wird. Bei diesem Entfernen kann es vorkommen, daß das Fleisch daran hängenbleibt und dadurch der Verdichtungsvorgang zumindest zum Teil wieder rückgängig gemacht wird. Auch beim Aufsetzen eines Spannrastdeckels nach der Aufbereitung in einer Vakuumkammer kann es in nachteiliger Weise wieder zu Lufteinschlüssen unterhalb des Deckels kommen. Auch dies wird bei der erfindungsgemäßen Vorrichtung vermieden.

Erwähnt sei noch, daß der Programmablauf beim Aufbereiten hinsichtlich der jeweiligen Beaufschlagungszeiten bzw. auch hinsichtlich der Intensität einstellbar ist. Somit läßt sich der Programmablauf in Anpassung an verschiedene vorgesehene Endprodukte sowie auch auf die jeweilige Beschaffenheit des gerade zu bearbeitenden Fleisches abstimmen. Anstatt einer manuellen Bestückung bzw. Entnahme der Formbehälter 2 könnte auch noch eine Fördereinrichtung vorgesehen sein, die diese Vorgänge kontinuierlich übernimmt. Dadurch könnte der gesamte Aufbereitungsvorgang auch ohne Bedienperson automatisch ablaufen.

Alle in der Beschreibung, den Ansprüchen und der Zeichnung dargestellten Merkmale können sowohl einzeln als auch in beliebiger Kombination miteinander erfindungswesentlich sein.

Ansprüche

1.  Vorrichtung zum Aufbereiten, insbesondere zum Verdichten von in einem Formbehälter befindlichem,
    rohen Fleisch, wobei diese Vorrichtung eine Preßvorrichtung zum Beaufschlagen des Fleisches aufweist,
    d a d u r c h   g e k e n n z e i c h n e t , daß
    der Formbehälter (2) mit einem Vibrationsgeber einer
    Vibrationseinrichtung in Verbindung steht.

2.  Vorrichtung nach Anspruch 1, dadurch gekennzeichnet,
    daß am Formbehälter (2) zumindest während der Aufbereitung eine das Fleisch im wesentlichen überdeckende
    Abdeckplatte (16) vorgesehen ist, und daß die Preßvorrichtung (7) einen Führungshalter (14) zum Halten
    dieser Abdeckplatte (16) etwa in horizontaler Lage
    und/oder zur Druckbeaufschlagung der Abdeckplatte
    (16) aufweist, und daß vorzugsweise die Abdeckplatte
    (16) durch den den Formbehälter (2) abschließenden
    Deckel (15) gebildet ist, der insbesondere als Spannrastdeckel ausgebildet ist.

3.  Vorrichtung nach Anspruch 1 oder 2, dadurch gekennzeichnet, daß eine Vakuumkammer (4) vorgesehen ist,
    innerhalb der sich die Preßvorrichtung (7) sowie die
    Vibrationseinrichtung befinden.

4. Vorrichtung nach einem der Ansprüche 1 bis 3, dadurch gekennzeichnet, daß ein Tisch (5) als Stellunterlage für einen oder mehrere Formbehälter (2) vorgesehen ist, der als Schwingtisch ausgebildet ist und mit dem Vibrationsgeber in Antriebsverbindung steht.

5. Vorrichtung nach einem der Ansprüche 1 bis 4, dadurch gekennzeichnet, daß zur Lagefixierung des Formbehälters (2) Führungen sowie Anschläge vorgesehen sind, insbesondere auf dem Schwingtisch (5) in Einschieberichtung verlaufende, den Formbehälter (2) seitlich beaufschlagende, vorzugsweise verstellbare Schienen (23) sowie rückseitig und vorderseitig Spannanschläge (25).

6. Vorrichtung nach einem der Ansprüche 1 bis 5, dadurch gekennzeichnet, daß die Vakuumkammer (4) zur Aufnahme von einem oder mehreren, vorzugsweise zur gleichzeitigen Aufnahme und Aufbereitung von zwei Formbehältern (2) ausgebildet ist.

7. Vorrichtung nach einem der Ansprüche 1 bis 6, dadurch gekennzeichnet, daß die Vakuumkammer (4) eine, vorzugsweise für jeden der beiden Formbehälter (2) eine Tür (13) aufweist, die innenseitig jeweils einen Spannanschlag (25) tragen.

8. Vorrichtung nach einem der Ansprüche 1 bis 7, dadurch gekennzeichnet, daß sie eine Steuerung (11) für einen insbesondere einstellbaren Programmablauf während der Aufbereitung aufweist.

9. Vorrichtung nach Anspruch 8, dadurch gekennzeichnet, daß die Steuerung (11) mit einem Türschließ- und Öffnungsmechanismus, mit der Vibrationseinrichtung, mit der Preßvorrichtung (7) sowie der Vakuumeinrichtung in Verbindung steht.

10. Vorrichtung nach einem der Ansprüche 1 bis 9, dadurch gekennzeichnet, daß zur Betätigung der Tür(en) (13) Hubzylinder (24) und als Türhalter in Schließstellung der in der Vakuumkammer (4) herrschende Unterdruck vorgesehen sind.

11. Vorrichtung nach einem der Ansprüche 1 bis 10, dadurch gekennzeichnet, daß oberhalb der Vakuumkammer (4) die Preßvorrichtung (7) mit für jeden aufzunehmenden Formbehälter (2) einem Druckzylinder (8) ud. dgl., insbesondere einem Pneumatikzylinder angeordnet ist, und daß vorzugsweise unterhalb der Vakuumkammer (4) ein Unterschrank (9) zur Aufnahme der Vakuumeinrichtung, der Vibrationseinrichtung sowie der Steuerung (11) u. dgl. vorgesehen ist.

12. Vorrichtung nach einem der Ansprüche 1 bis 11, dadurch gekennzeichnet, daß die Vakuumkammer Sichtfenster, insbesondere aus durchsichtigem Material bestehende Türen (13) aufweist.

13. Verfahren zum Aufbereiten, insbesondere zum Verdichten von Fleisch vor einem Weiterbearbeitungsvorgang, wobei das Fleisch zumindest einer Druckbeaufschlagung ausgesetzt wird, d a d u r c h   g e k e n n z e i c h n e t , daß während der Aufbereitung des Fleisches ein Vibrationsverdichten vorgenommen wird.

14. Verfahren nach Anspruch 13, dadurch gekennzeichnet, daß während der Aufbereitung eine Vakuumbeaufschlagung erfolgt.

15. Verfahren nach Anspruch 13 oder 14, dadurch gekennzeichnet, daß vor der Druckbeaufschlagung eine Vorvibrationsbeaufschlagung erfolgt, vorzugsweise über einen Zeitintervall von etwa 2 bis 200 Sekunden.

/4

16. Verfahren nach Anspruch 15, dadurch gekennzeichnet,
    das nach der Vorvibrationsbeaufschlagung eine Vergrößerung der Vakuumbeaufschlagung bei gleichzeitig
    anhaltender Vibrationsbeaufschlagung erfolgt.

17. Verfahren nach einem der Ansprüche 13 bis 16, dadurch
    gekennzeichnet, daß Fleisch zum Formpökeln nach Ablauf
    etwa der Hälfte der Gesamtzeit der Vakuumbeaufschla-
    gung bei gleichzeitig fortlaufender Vibrationsbeauf-
    schlagung druckbeaufschlagt wird.

18. Verfahren nach einem der Ansprüche 13 bis 16, dadurch
    gekennzeichnet, daß Fleisch für einen anschließenden
    Gar-, Brat-, Back- oder Kochvorgang nach dem Vibrationsvorlauf von vorzugsweise 2 bis 10 Sekunden sowie
    Erhöhung des Unterdruckes unter gleichzeitig fortlaufender Vibrationsbeaufschlagung, druckbeaufschlagt
    wird.

19. Verfahren nach einem der Ansprüche 13 bis 18, dadurch
    gekennzeichnet, daß nach Ablauf der Gesamt-Vibrationsbeaufschlagung ein Belüften der Vakuumkammer sowie ein
    Öffnen der Tür(en) erfolgt.

- Beschreibung -

Fig.1

0106078

1/4

S82425/426 TNC Handsche

Fig.2

0106078

Fig. 3

*Fig.4*

Europäisches
Patentamt

# EUROPÄISCHER RECHERCHENBERICHT

EP 83 10 8363

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A- 862 273 (SORENSEN)<br><br>* Seite 1, Zeilen 64-74; Seite 2, Zeilen 16-32, 67-87; Seite 3, Zeilen 10-60 *<br><br>--- | 1,4,11 ,13 | A 22 C 7/00 |
| A | DE-A-2 906 868 (SOMMER)<br><br>* Seite 8, Zeile 32 - Seite 10, Zeile 37 *<br><br>--- | 3,6-9, 11,14, 16,19 | |
| A | FR-A-1 213 004 (PAVALY)<br>* Seite 2, linke Spalte, dritter Abschnitt - rechte Spalte, erster Abschnitt; Figur 2 *<br><br>--- | 2 | |
| A | DE-C- 564 384 (JACOBY)<br>* Insgesamt *<br><br>--- | 5 | RECHERCHIERTE SACHGEBIETE (Int. Cl. ³) |
| P,A | FR-A-2 513 490 (ROSCHER WERKE)<br><br>* Seite 5, Zeile 9 - Seite 10, Zeile 35 *<br><br>--- | 2,3,5, 6,8 | A 22 C<br>A 23 B<br>A 23 P |
| A | FR-A-2 270 802 (SUPERVAC)<br><br>----- | | |

Der vorliegende Recherchenbericht wurde für alle Patentansprüche erstellt.

| Recherchenort<br>DEN HAAG | Abschlußdatum der Recherche<br>02-01-1984 | Prüfer<br>DE LAMEILLIEURE D. |
|---|---|---|